# EUROPÄISCHE PATENTSCHRIFT

(11) **EP 0 882 612 B1**
(45) Veröffentlichungstag und Bekanntmachung des Hinweises auf die Patenterteilung: **08.08.2001**
(21) Anmeldenummer: 98109386.7
(22) Anmeldetag: 23.05.1998
(51) Int. Cl.: B60J 7/10, B60J 7/06

(54) **Zusammenschiebbares Verdeck für Fahrzeugaufbauten u.Container**
Foldable tarpaulin for vehicle bodies and container
Bâche coulissant pour carrosseries de véhicule et conteneurs

(30) Priorität: 02.06.1997 DE 29709540 U
(43) Veröffentlichungstag der Anmeldung: 09.12.1998
(73) Patentinhaber: Edscha LKW-Schiebeverdecke GmbH, 42855 Remscheid (DE)
(72) Erfinder: Remmel, Roger, 42897 Remscheid (DE); Drasch, Josef, 94577 Winzer (DE)
(74) Vertreter: Sparing, Rolf Klaus

(56) Entgegenhaltungen:
- EP-A- 0 459 879
- CH-A- 136 218
- FR-A- 2 162 703

## Beschreibung

Die Erfindung bezieht sich auf ein zusammenschiebbares Verdeck für Fahrzeugaufbauten und Container, mit einem in der Hauptsache aus die Laderaumlänge überspannenden, über aufragende Stützen und Rungen gegen das Fahrzeugchassis abgestützten oberen Längsgurten bestehenden Verdeckgestell, bei dem eine mindestens den Dachbereich des Verdeckes übergreifende Plane von die Ladeflächenbreite überspannenden und vermittels Rollenwagen und in Fahrzeuglängsrichtung verschieblich an den Längsgurten des Verdeckgestelles abgestützten Spriegeln getragen ist, wobei einander benachbarte Spriegel im Bereich beider Verdecklängsseiten jeweils mittels eines um wenigstens zwei vorgezeichnete Gelenklinien klappbaren Auflageelementes für die Plane derart untereinander verbunden sind, daß eine Verringerung des Abstandes zwischen zwei benachbarten Spriegeln in diesem Bereich zu einer nach oben gerichteten Faltung der Plane führt, und wobei die Auflageelemente mit ihren Enden auf den Spriegeln aufliegend angeordnet und über durchgreifende Befestigungsmittel an den Spriegeln befestigt sowie im Bereich zwischen den Spriegeln mit bei geschlossenem Verdeck an dem zugeordneten Längsgurt in Anlage befindlichen Abstützungen versehen sind,

Bei einem bekannten Verdeck der vorgenannten Bauart (CH-PS 136 218) sind die die Verdeckplane abstützenden Spriegel entlang beider Verdecklängsseiten über durch Längenabschnitte eines flachen Bandmaterials gebildete und im Wesentlichen deckungsgleich zu den oberen Längsgurten des Verdeckgestelles angeordnete Auflageelemente für die Dachplane untereinander verbunden, wobei die Bandmaterialabschnitte an ihren beiden Enden jeweils mittels Nieten an benachbarten Spriegeln befestigt und mit vorgezeichneten Gelenklinien ausgestattet sind, derart, daß sie bei einem Zusammenschieben des Verdeckes infolge der Abstandsverringerung zwischen benachbarten Spriegel nach oben klappen und damit eine Faltung der Verdeckplane bewirken. Die Gelenklinien der Auflageelemente sind dabei zueinander parallel und senkrecht zur Längserstreckung der oberen Längsgurte des Verdeckgestelles ausgerichtet. Aus dieser senkrecht zur Längserstreckung der oberen Längsgurte des Verdeckgestelles gerichteten Ausrichtung der Gelenklinien in den Auflageelementen resultiert eine exakt vertikal gerichtete Hubbewegung des mittleren Bereiches der Auflageelemente, welche zur Folge haben kann, daß die Plane beim Öffnen und Schließen des Verdeckes gegen die Längsgurte des Verdeckgestelles gedrückt werden und dabei beschädigt werden kann.

Bei einer anderen Bauart eines zusamenschiebbaren Verdeckes für Kraftfahrzeuge (FR-PS 2 162 703) ist zur Behebung des Problems eines Schleifens oder Einklemmens der Dachplane an den oberen Längsgurten des Verdeckgestelles vorgeschlagen worden, an den den Verdeckseitenbereichen zugeordneten und nach unten gerichteten Abwinkelungen der Spriegel ein Band aus einem halbstarren Material zu befestigen, welches bei einem Zusammenschieben des Verdeckes einen nach außen gerichteten Faltenwurf der Verdeckplane erzwingt und damit eine Beschädigung der Plane beim Öffnen und Schließen des Verdeckes ausschließen soll.
Eine derartige Anordnung läßt sich jedoch zum einen in Verbindung mit einer Verdeckbauart der eingangs beschriebenen Bauart nicht anwenden und würde zum anderen darüber hinaus bei einer nach oben gerichteten Faltung der Plane beim Öffnen des Verdeckes auch nicht zu dem angestrebten Erfolg führen, ganz abgesehen davon, daß die Anbringung zusätzlicher Mittel zur Beseitigung des Problems des Anliegens der Plane an den Verdecklängsgurten mit einem nicht unbeträchtlichen Mehraufwand für die Verdeckausbildung verbunden wäre.

Der Erfindung liegt daher die Aufgabe zugrunde ein zusammenschiebbares Verdeck der eingangs bezeichneten Bauart dahingehend zu verbessern, daß die an beiden Längsseiten des Verdeckes angeordneten Auflageelemente durch Längenabschnitte eines Strangprofilmaterials gebildet werden können und zugleich das Problem des Anliegens der Dachplane beim Öffnen und Schließen des Verdeckes ohne zusätzlichen Aufwand beseitigt ist.

Diese Aufgabe wird ausgehend von einem zusammenschiebbaren Verdeck der eingangs bezeichneten Bauart erfindungsgemäß dadurch gelöst, daß die ihrer Auflage an den Spriegeln benachbarten Gelenklinien der Auflageelemente in einem Winkel, insbesondere unter einem flachen (d.h.spitzen) Winkel, zur Fahrzeugmitte hin, zur Spriegellängsachse ausgerichtet sind. Die erfindungsgemäße Ausrichtung der Gelenklinien der Auflageelemente führt, ohne jeglichen zusätzlichen Aufwand und unter Belassung der Möglichkeit die Auflageelemente aus Längenabschnitten eines Strangprofiles darzustellen, zu einer von einer nach außen gerichteten Kippbewegung überlagerten Hubbewegung der Auflageelemente beim Zusammenschieben des Verdeckes und damit zugleich zu einem seitlichen Abheben der Plane von den oberen Längsgurten des Verdeckgestelles, so daß die Gefahr einer Beschädigung der Plane beseitigt ist.

Die Auflageelemente bestehen zweckmäßigerweise jeweils aus einem Streifen eines halbstarren Materials bestehen und sind über ihre Erstreckung zwischen ihren Auflagen an den Spriegeln benachbarten Gelenklinien hin gelenkfrei gestaltet.

In einer vorteilhaften Ausgestaltungsform kann zur Entlastung der die Auflageelemente mit den Spriegeln verbindenden Befestigungsmittel, insbesondere Niete, weiterhin vorgesehen sein, daß den Stirnenden der Auflageelemente quer zu deren Längserstreckung ausgerichtete Widerlager am jedem Spriegel zugeordnet sind, in der Weise, daß die sich aus den Durchbiegungen der Auflageelemente beim Öffnen und schließen des Verdeckes ergebenden Zug-und Druckkräfte von den Widerlagern aufgenommen und dadurch die Befestigungsmittel von solchen Kräften freigehalten werden. Damit ist selbst bei Einsatz einer geringstmöglichen Anzahl von Befestigungsmitteln ein Ausreißen der Auflageelemente ausgeschlossen.

In einer zweckmäßigen Verwirklichungsform dieser Ausgestaltung sind die den Stirnenden der Auflageelemente zugeordneten Widerlager durch Durchsetzungen in einem mit dem Spriegel verbindbaren Halteblech gebildet, wobei eine bevorzugte Gestaltungsform darin gesehen wird, daß die Haltebleche die auf dem Spriegel aufliegenden Endbereiche der beiden an einem Spriegel zu befestigenden Auflageelemente übergreifen und mit zwei zueinander sowie zur Spriegellängsachse parallel ausgerichteten Durchsetzungen versehen sind, wobei die Haltebleche über zugleich auch die Endbereiche der Auflageelemente durchgreifende Befestigungsmittel, Schraubenbolzen oder Niete, an den Spriegeln befestigbar sind. Die Haltebleche weisen hierbei zweckmäßigerweise in der Draufsicht eine zum Verlauf der Gelenklinien beider an einen Spriegel angeschlossener Auflageelemente deckungsgleiche Grundrißform auf.

Die jeweils aus einem Steifen eines halbstarren Materials bestehenden Auflageelemente weisen in an sich bekannter Weise eine im wesentlichen glatte, der Auflage der Plane zugeordnete Oberseite mit einer wenigstens der Breite eines Spriegels entsprechende, vorzugsweise jedoch einer größeren Breite auf.
Die Auflageelemente sind dabei zugleich unterseitig mit vertikal zu ihrer Oberseitenebene gerichteten, bei geschlossenem Verdeck auf den oberen Längsgurten des Verdeckgestelles aufliegenden Stützteilen ausgestattet, welche sich jeweils lediglich über begrenzte Längenbereiche der Auflageelemente hin erstrecken, derart, daß die Stützteile zwar einerseits bei geschlossenem Verdeck eine Abstützung der Auflageelemente gegen die Verdecklängsgurte bilden, andererseits aber auch beim Öffnen des Verdeckes das erforderliche, nach oben gerichtete Durchbiegen der Auflageelemente nicht behindern.
In einer bevorzugten Verwirklichungsform ist hierzu vorgesehen, daß die Auflageelemente durch Längenabschnitte eines Strangprofiles gebildet sind, wobei die Stützteile durch eine unterseitig an die Auflagefläche angeschlossene Hohlprofilform gebildet sind und wobei das unterseitig an das Strangprofil angeschlossene Hohlprofil zur Bildung der Stützteile über zumindest einen Teil der Länge jedes Auflageelementes hin aus bzw. abgeschnitten ist. Insbesondere ist die Hohlprofilform wenigstens im Bereich der Längsmitte, vorzugsweise jedoch auch im Bereich der beiden Enden und jedes Auflageelementes zwar die Gelenklinien übergreifend völlig entfernt, so daß es einer optimalen Abbiegung des Auflageelementes beim Öffnen des Verdeckes keinerlei Widerstand entgegensetzt.
Eine zweckmäßige und bevorzugte Gestaltungsform der unterseitig an die Auflagefläche der Auflageelemente angeschlossenen Hohlprofilform ist durch ein dreieckiges Querschnittsprofil gebildet. Im Rahmen der Darstellung der Auflageelemente durch Längenabschnitte eines Strangprofiles kann ferner vorgesehen sein, daß die Auflagefläche zumindest streckenweise durch entlang ihrer beiden Längsränder angeordnete Randwülste verstärkt ist, wobei die Randwülste wenigstens im Bereich der Längsmitte jedes Auflageelementes ausgeschnitten sind.
Ausgehend von der erfindungsgemäßen Ausbildung der Auflageelemente als Strangprofil kann selbstverständlich auch jede andere Querschnittsform der unterseitig an die Auflagefläche angeschlossenen, die Stützteile bildenden Profilformen vorgesehen werden, beispielsweise kann hierbei ein oder können mehrere senkrecht zur Auflagefläche der Auflageelemente ausgerichteter Profilstege vorgesehen sein, wobei jedoch auch bei solchen Profilformen vorgesehen ist, daß die Stützteile durch Freischneiden des Profiles mindestens im Bereich der Längsmitte, vorzugsweise aber zugleich auch im Bereich der beiden Enden der Auflageelemente auf begrenzte Längenbereiche der Auflageelemente begrenzt sind.

Unabhängig von der Gestaltungsform der zur Ausbildung von Stützteilen unterseitig und senkrecht zu dieser ausgerichtet an die Auflagefläche der Auflageelemente angeschlossenen Profilformen kann weiterhin vorgesehen sein, daß die Profilformen stufenförmig ausgeschnitten sind, dahingehend, daß sie über den mittleren und die beiden Endbereiche der Auflageelemente hin völlig entfernt und über symmetrisch zur Längsmitte der Auflageelemente verlaufende Längenabschnitte hin lediglich teilweise ausgeschnitten sind, derart, daß sie an Stützfüße anschließend lediglich Versteifungsbereiche bilden.

In einer weiteren Ausgestaltungsform ist vorgesehen, daß die durch Strangprofilabschnitte gebildeten Auflageelemente über ihre Länge hin gesehen unsymetrisch gestaltet sind, derart, daß sie lediglich in einem ersten etwa ihrer halben Länge entsprechenden Bereich mit einem unterseitig angeordneten durch Ausschnitte des Strangprofiles gebildeten Stützteil versehen, über ihre übrige Länge hin jedoch gleichförmig und biegeweich gestaltet sind. Bei dieser Ausgestaltungsform sind die Auflageelemente lediglich über die Hälfte ihrer Länge hin mit an einen Stützfuß anschließend ausgebildeten Versteifungsbereichen versehen, über die andere Hälfte ihrer Länge hin jedoch gleichförmig verformbar. Dies hat den Vorteil, daß beim Zusammenschieben des Verdeckes eine Vorfaltung der Plane erreicht werden kann, welche bei ungünstiger Witterung ein Ablaufen von evtl. auf der Plane stehendem Wasser oder ein Abrutschen von Schneematsch oder dergl. bewirkt und somit unter derartigen ungünstigen Verhältnissen das Öffnen des Verdeckes erleichtert.

Die Erfindung ist in der nachfolgenden Beispielsbeschreibung anhand eines in der Zeichnung dargestellten Ausführungsbeispieles im Einzelnen beschrieben. In der Zeichnung zeigt die
Figur 1 eine schematische Darstellung eine mit einem zusammenschiebbaren Verdeck ausgestatteten Nutzfahrzeuges;
Figur 2 eine ausschnittweise Draufsicht auf die Spriegel und Auflageelemente entlang einer Verdecklängsseite;
Figur 3 eine ausschnittweise Seitenansicht der Spriegel und Auflageelemente bei geschlossenem Verdeck;
Figur 4 eine ausschnittweise Seitenansicht der Spriegel und Auflageelemente bei geöffnetem Verdeck;
Figur 5 eine Strinansicht der Spriegel und Auflageelemente bei geöffnetem Verdeck;
Figur 6 eine Draufsicht auf ein Halteblech;
Figur 7 eine Schnittdarstellung eines Haltebleches;
Figur 8 eine Seitenansicht eines Auflageelementes;
Figur 9 eine Schnittdarstellung eines Auflageelementes;
Figur 10 eine Seitenansicht einer abgewandelten Gestaltungsform eines Auflageelementes.

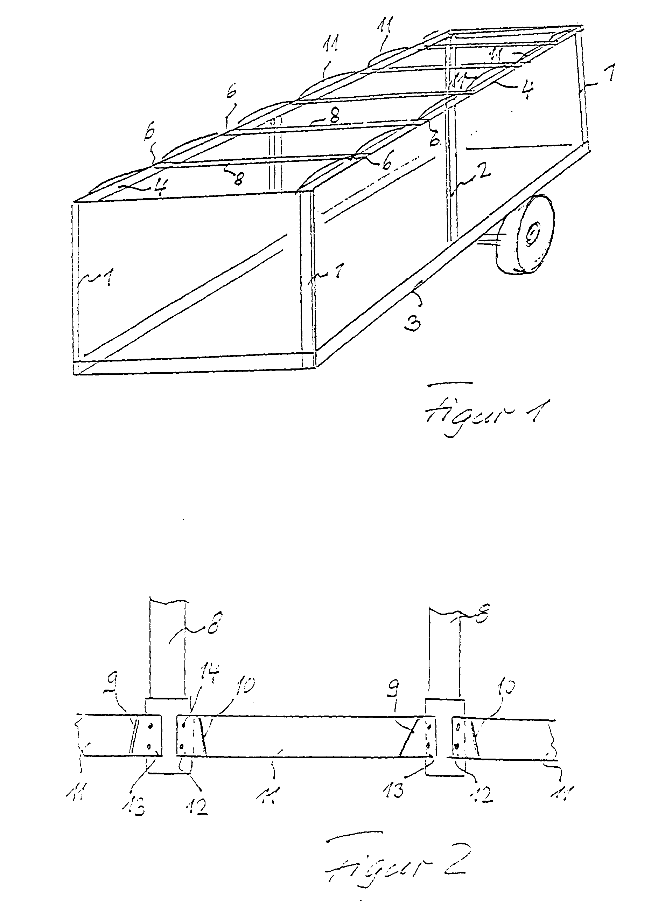

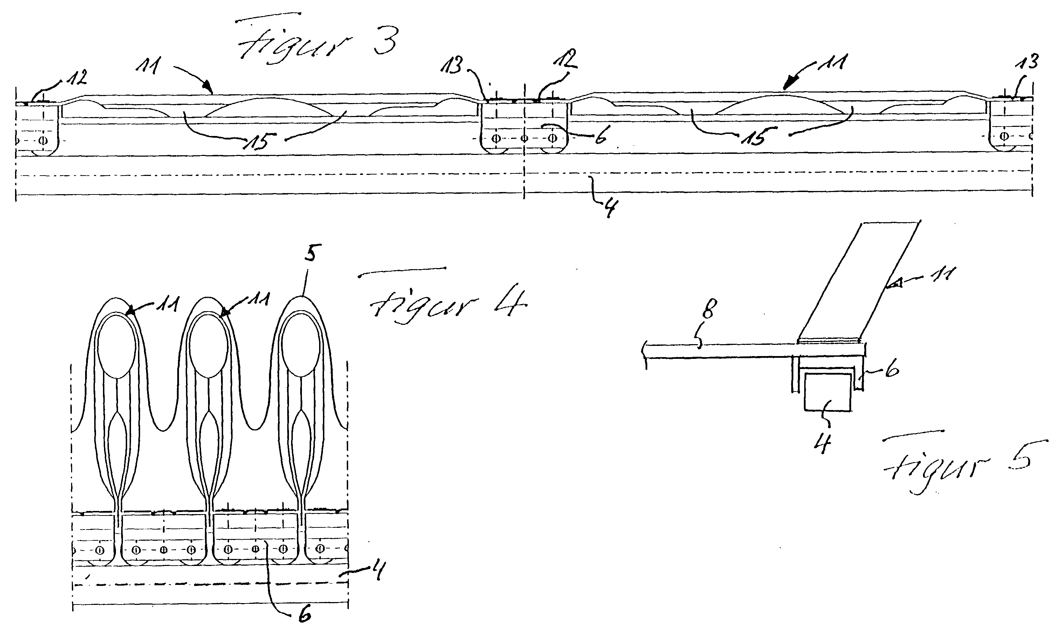

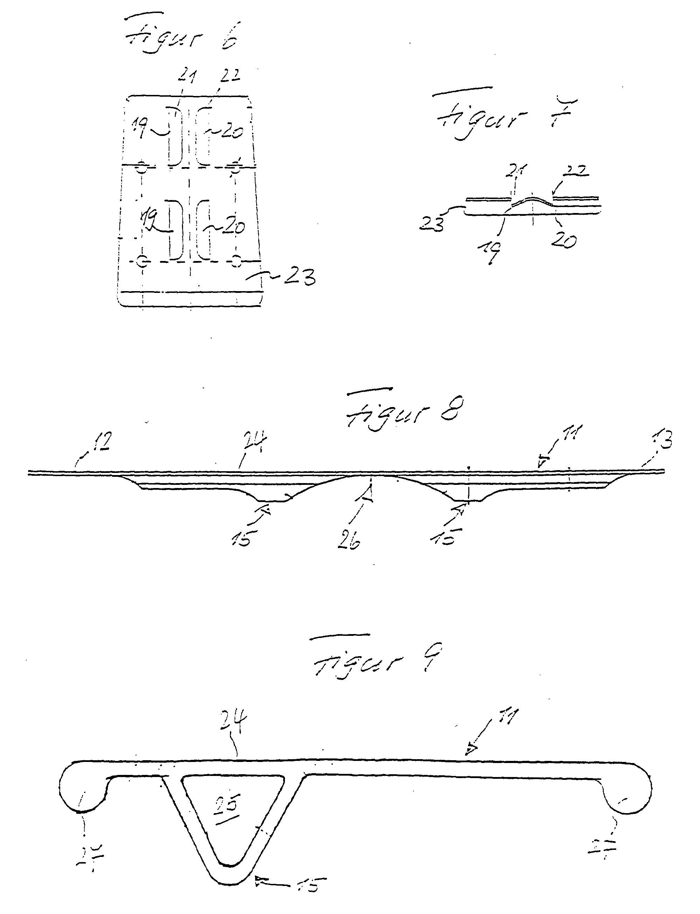

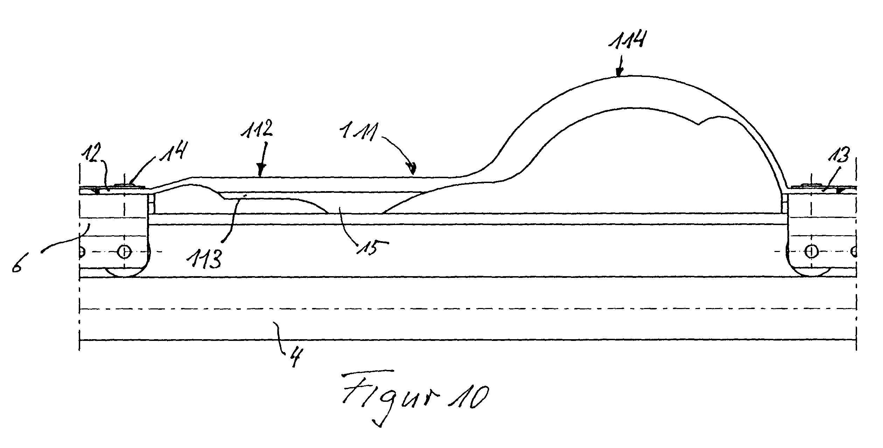

Das in der Zeichnung schematisch dargestellte, zusammenschiebbare Verdeck für einen Fahrzeugaufbau besteht aus einem in der Hauptsache aus die Laderaumlänge überspannenden, über aufragende Stützen 1 und Rungen 2 gegen das Fahrzeugchassis 3 abgestützten oberen Längsgurten 4 bestehenden Verdeckgestell, bei dem eine mindestens den Dachbereich des Verdeckes übergreifende Plane 5 von die Ladeflächenbreite überspannenden und vermittels Rollenwagen 6 in Fahrzeuglängsrichtung verschieblich an den Längsgurten 4 des Verdeckgestelles abgestützten Spriegeln 8 getragen ist. Einander benachbarte Spriegel 8 sind im Bereich beider Verdecklängsseiten jeweils mittels eines um zwei vorgezeichnete Gelenklinien 9 und 10 klappbaren Auflageelementes 11 für die Plane 5 derart untereinander verbunden, daß eine Verringerung des Abstandes zwischen zwei benachbarten Spriegeln 8 in diesem Bereich zu einer nach oben gerichteten Faltung der Plane 5 führt. Die Auflageelemente 11 sind mit ihren Enden 12 und 13 auf den Spriegeln 8 aufliegend angeordnet und über durchgreifende Befestigungsmittel, insbesondere Niete 14, an den Spriegeln 8 befestigt. Im Bereich zwischen zwei benachbarten Spriegeln 8 sind die Auflageelemente 11 mit bei geschlossenem Verdeck an dem zugeordneten Verdecklängsgurt 4 in Anlage befindlichen Abstützungen 15 versehen.

Die ihrer Auflage 12 bzw. 13 an den Spriegeln 8 benachbarten Gelenklinien 9 und 10 der Auflageelemente 11 sind in einem flachen Winkel zur Fahrzeugmitte hin, zur Spriegellängsachse ausgerichtet.
Die Auflageelemente 11 bestehen jeweils aus einem Steifen eines halbstarren Materials, insbesondere Kunststoffmaterials, und sind über ihre Erstreckung zwischen den ihren Auflagen 12 und 13 an den Spriegeln 8 benachbarten Gelenklinien 9 und 10 hin gelenkfrei gestaltet. In der gezeigten Ausführungsform sind die Auflageelemente 11 an den Spriegeln 8 mittels Niete 14 befestigt.
Den Stirnenden der Auflageelemente 11 sind Widerlager 19 und 20 zugeordnet, welche bei der gezeigten Ausführungsform durch Durchsetzungen 21 und 22 in einem mit dem Spriegel 8 verbindbaren Halteblech 23 gebildet sind. Die Haltebleche 23 übergreifen die auf dem Spriegel 8 aufliegenden Endbereiche 12 und 13 der beiden an einem Spriegel 8 zu befestigenden Auflageelemente 11 und sind mit zwei zueinander sowie zur Spriegellängsachse parallel ausgerichteten Durchsetzungen 21 und 22 versehen. Die Haltebleche 23 sind über zugleich auch die Endbereiche 12 und 13 der Auflageelemente 11 durchgreifende Niete 14, an den Spriegeln 8 befestigt. Die Haltebleche 23 weisen in der Draufsicht eine zum Verlauf der Gelenklinien 9 und 10 beider an einen Spriegel 8 angeschlossener Auflageelemente 11 deckungsgleiche Grundrißform auf. Die jeweils aus einem Streifen eines halbstarren Materials bestehenden Auflageelemente 11 weisen in an sich bekannter Weise eine im wesentlichen glatte, der Auflage der Plane zugeordnete Oberseite 24 mit einer wenigstens der Breite eines Spriegels entsprechenden, vorzugsweise jedoch einer größeren Breite auf.
Die Auflageelemente 11 sind dabei zugleich unterseitig mit vertikal zu ihrer Oberseitenebene gerichteten, bei geschlossenem Verdeck auf den oberen Längsgurten 4 des Verdeckgestelles aufliegenden Stützteilen 15 ausgestattet, welche sich jeweils lediglich über begrenzte Längenbereiche der Auflageelemente 11 hin erstrecken, derart, daß die Stützteile 15 zwar einerseits bei geschlossenem Verdeck eine Abstützung der Auflageelemente 11 gegen die Verdecklängsgurte 4 bilden, andererseits aber auch beim Öffnen des Verdeckes das erforderliche, nach oben gerichtete Durchbiegen der Auflageelemente 11 nicht behindern.
In der gezeigten Verwirklichungsform ist hierzu vorgesehen, daß die Auflageelemente 11 durch Längenabschnitte eines Strangprofiles gebildet sind, wobei die Stützteile 15 durch eine unterseitig an die Auflagefläche angeschlossene Hohlprofilform 25 gebildet sind und wobei das unterseitig an das Strangprofil angeschlossene Hohlprofil 25 zur Bildung der Stützteile 15 über zumindest einen Teil der Länge jedes Auflageelementes 11 hin aus-bzw. abgeschnitten ist. Insbesondere ist die Hohlprofilform 25 wenigstens im Bereich der Längsmitte 26, vorzugsweise jedoch auch im Bereich der beiden Enden 12 und 13 jedes Auflageelementes 11 und zwar die Gelenklinien 9 und 10 übergreifend völlig entfernt, so daß es einer optimalen Abbiegung des Auflageelementes 11 beim Öffnen des Verdeckes keinerlei Widerstand entgegensetzt.
Eine zweckmäßige und bevorzugte Gestaltungsform der unterseitig an die Auflagefläche der Auflageelemente angeschlossenen Hohlprofilform 25 ist durch ein dreieckiges Querschnittsprofil gebildet. Im Rahmen der Darstellung der Auflageelemente 11 durch Längenabschnitte eines Strangprofiles ist ferner vorgesehen, daß die Auflagefläche 24 zumindest streckenweise durch entlang ihrer beiden Längsränder angeordnete Randwülste 27 verstärkt ist, wobei die Randwülste 27 wenigstens im Bereich der Längsmitte jedes Auflageelementes 11 ausgeschnitten sind.

Ausgehend von der erfindungsgemäßen Ausbildung der Auflageelemente als Strangprofil kann selbstverständlich auch jede andere Querschnittsform der unterseitig an die Auflagefläche angeschlossenen, die Stützteile bildenden Profilformen vorgesehen werden, beispielsweise kann hierbei ein oder können mehrere senkrecht zur Auflagefläche der Auflageelemente ausgerichteter Profilstege vorgesehen sein, wobei jedoch auch bei solchen Profilformen vorgesehen ist, daß die Stützteile durch Freischneiden des Profiles mindestens im Bereich der Längsmitte, vorzugsweise aber zugleich auch im Bereich der beiden Enden der Auflageelemente auf begrenzte Längenbereiche der Auflageelemente begrenzt sind.

Unabhängig von der Gestaltungsform der zur Ausbildung von Stützteilen unterseitig und senkrecht zu dieser ausgerichtet an die Auflagefläche der Auflageelemente angeschlossenen Profilformen kann weiterhin vorgesehen sein, daß die Profilformen stufenförmig ausgeschnitten sind, dahingehend, daß sie über den mittleren und die beiden Endbereiche der Auflageelemente hin völlig entfernt und über symmetrisch zur Längsmitte der Auflageelemente verlaufende Längenabschnitte hin lediglich teilweise ausgeschnitten sind, derart, daß sie an Stützfüße anschließend lediglich Versteifungsbereiche bilden.
Gemäß der in der Figur 10 dargestellten Ausgestaltungsform ist ein durch einen Strangprofilabschnitt gebildetes Auflageelement 111 über seine Länge hin gesehen unsymetrisch gestaltet. Das Auflageelement 111 weist in einem ersten etwa seiner halben Länge entsprechenden Bereich 112 einem unterseitig angeordneten durch Ausschnitte des Strangprofiles gebildeten Stützteil 15 und an diesen anschließend einen Versteifungsbereich 113 auf. Über seinen zweiten Längeneberich 114 hin ist das Auflageelement 111 jedoch gleichförmig und biegeweich gestaltet, wobei die Formgebung so getroffen ist, daß sich der zweite Längenbereich zu einer nach oben gerichteten Durchwölbung verformt bevor eine Faltung des gesamten Auflageelementes 111 eintritt.

## Patentansprüche

1. Zusammenschiebbares Verdeck für Fahrzeugaufbauten und Container, mit einem in der Hauptsache aus die Laderaumlänge überspannden, über aufragende Stützen (1) und Rungen (2) gegen das Fahrzeugchassis (3) abgestützten oberen Längsgurten (4) bestehenden Verdeckgestell, bei dem eine mindestens den Dachbereich des Verdeckes übergreifende Plane (5) von die Ladeflächenbreite überspannenden und vermittels Rollenwagen (6) und in Fahrzeuglängsrichtung verschieblich an den Längsgurten des Verdeckgestelles abgestützten Spriegeln (8) getragen ist, wobei einander benachbarte Spriegel im Bereich beider Verdecklängsseiten jeweils mittels eines um wenigstens zwei vorgezeichnete Gelenklinie (9,10) kappbaren Auflageelementes (11) für die Plane derart untereinander verbunden sind, daß eine Verringerung des Abstandes zwischen zwei benachbarten Spriegeln in diesem Bereich zu einer nach oben gerichteten Faltung der Plane führt, und wobei die Auflageelemente mit ihren Enden (12,13) auf den Spriegeln aufliegend angeordnet und über durchgreifende Befestigungsmittel (14) an den Spriegeln befestigt sowie im Bereich zwischen den Spriegeln mit bei geschlossenem Verdeck an dem zugeordneten Längsgurt in Anlage befindlichen Abstützungen (15) versehen sind,
dadurch gekennzeichnet, daß
die ihrer Auflage an den Spriegeln (8) benachbarten Gelenklinien (9, 10) der Auflageelemente (11) in einem Winkel zur Fahrzeugmitte hin, zur Spriegellängsachse ausgerichtet sind.

2. Verdeck nach Anspruch 1, dadurch gekennzeichnet, daß die Gelenklinien der Auflageelemente unter einem spitzen Winkel zur Spriegellängsachse ausgerichtet sind.

3. Verdeck nach Anspruch 1 oder 2, dadurch gekennzeichnet, daß die Auflageelemente jeweils aus einem Streifen eines halbstarren Materials bestehen und über ihre Erstreckung zwischen den ihren Auflagen an den Spriegeln benachbarten Gelenklinien gelenkfrei gestaltet sind.

4. Verdeck nach einem der Ansprüche 1 bis 3, dadurch gekennzeichnet, daß den Stirnenden der Auflageelemente quer zu deren Längserstreckung ausgerichtete Widerlager am jedem Spriegel zugeordnet sind.

5. Verdeck nach Anspruch 4, dadurch gekennzeichnet, daß die den Stirnenden der Auflageelemente zugeordneten Widerlager durch Durchsetzungen in einem mit dem Spriegel verbindbaren Halteblech(23) ausgebildet sind.

6. Verdeck nach einem der Ansprüche 1 bis 5, dadurch gekennzeichnet, daß die Haltebleche die auf dem Spriegel aufliegenden Endbereiche der beiden an einem Spriegel zu befestigenden Auflageelemente übergreifen und mit zwei zueinander sowie zur Spriegellängsachse parallel ausgerichteten Durchsetzungen (21, 22) versehen sind und daß die Haltebleche über zugleich auch die Endbereiche der Auflageelemente durchgreifende Befestigungsmittel (14) an den Spriegeln befestigbar sind.

7. Verdeck nach einem der Ansprüche 1 bis 6, dadurch gekennzeichnet, daß die Haltebleche in der Draufsicht eine zum Verlauf der Gelenklinien beider an einen Spriegel angeschlossener Auflageelemente deckungsgleiche Grundrißform aufweisen.

8. Verdeck nach einem der Ansprüche 1 bis 7, dadurch gekennzeichnet, daß die Auflageelemente eine im wesentlichen glatte Oberseite mit einer wenigstens der Breite eines Spriegels entsprechenden Breite aufweisen.

9. Verdeck nach eine der Ansprüche 1 bis 8, dadurch gekennzeichnet, daß die Auflageelemente unterseitig mit vertikal zu ihrer Oberseitenebene gerichteten, bei geschlossenem Verdeck auf den oberen Längsgurten des Verdeckgestelles aufliegenden Stützteilen (15) ausgestattet sind.

10. Verdeck nach einem der Ansprüche 1 bis 9, dadurch gekennzeichnet, daß sich die Stützteile jeweils lediglich über begrenzte Längenbereiche der Auflageelemente hin erstrecken.

11. Verdeck nach einem der Ansprüche 1 bis 10, dadurch gekennzeichnet, daß die Stützteile durch eine Hohlprofilform (25) ausgebildet sind.

12. Verdeck nach einem der Ansprüche 1 bis 11, dadurch gekennzeichnet, daß die Auflageelemente durch Strangprofilabschnitte gebildet und die unterseitig angeordneten Stützteile durch Ausschnitte des Strangprofiles gebildet sind.

13. Verdeck nach einem der Ansprüche 1 bis 12, dadurch gekennzeichnet, daß die Stützteile durch eine Hohlprofilform mit dreieckigem Querschnittsprofil gebildet und wenigstens über den mittleren Bereich der Auflageelemente hin ausgeschnitten sind.

14. Verdeck nach einem der Ansprüche 1 bis 13, dadurch gekennzeichnet, daß die durch Strangprofilabschnitte gebildeten Auflageelemente über ihre Länge hin gesehen unsymetrisch gestaltet sind, derart, daß sie lediglich in einem ersten etwa ihrer halben Länge entsprechenden Bereich mit einem unterseitig angeordneten durch Ausschnitte des Strangprofiles gebildeten Stützteil versehen, über ihre übrige Länge hin jedoch gleichförmig und biegeweich gestaltet sind.

## Claims

1. Telescopic cover for vehicle bodies and containers, with a cover frame consisting mainly of the upper longitudinal belts (4) spanning the loading space length and supported by projecting supports (1) and stakes (2) against the vehicle chassis (3), in which cover frame a tarpaulin (5) which covers at least the roof region of the cover is carried by the hoops (8) spanning the loading area width and supported by means of roller carriages (6) and supported displaceably in the longitudinal direction of the vehicle on the longitudinal belts of the cover frame, wherein hoops which are adjacent to one another in the region of the two longitudinal sides of the cover are connected to one another respectively by means of a support element (11) for the tarpaulin which can be folded down about at least two articulation lines (9, 10) in such a way that a reduction of the spacing between two adjacent hoops in this region leads to an upwardly directed folding of the tarpaulin and wherein the support elements are arranged with their ends (12, 13) resting on the hoops and are secured to the hoops by penetrating securing means (14) and, in the region between the hoops, are provided with supports (15) located adjacent to the associated longitudinal belt when the cover is closed, characterised in that the articulation lines (9, 10) of the support elements (11) adjacent to their support on the hoops (8) are aligned, at an angle towards the centre of the vehicle, to the longitudinal axis of the hoops.

2. Cover according to claim 1, characterised in that the articulation lines of the support elements are aligned at an acute angle to the longitudinal axis of the hoops.

3. Cover according to claim 1 or 2, characterised in that the support elements respectively consist of a strip of a semi-rigid material and are formed without joints by their extension between the articulation lines adjacent to their supports on the hoops.

4. Cover according to any one of claims 1 to 3, characterised in that abutments aligned transversely to the longitudinal extension of the support elements on each hoop are associated with the front ends of the support elements.

5. Cover according to claim 4, characterised in that the abutments associated with the front ends of the support elements are formed by penetrations in a retaining metal sheet (23) which can be connected to the hoop.

6. Cover according to any one of claims 1 to 5, characterised in that the retaining metal sheets cover the end regions resting on the hoop of the two support elements to be secured to a hoop and are provided with two penetrations (21, 22) aligned with one another and aligned parallel to the longitudinal axis of the hoops and in that the retaining metal sheets can be secured to the hoops via securing means (14) also simultaneously penetrating the end regions of the support elements.

7. Cover according to any one of claims 1 to 6, characterised in that the retaining metal sheets, in plan view, have a plan form which is congruent to the course of the articulation lines of the two support elements connected to a hoop.

8. Cover according to any one of claims 1 to 7, characterised in that the support elements have a substantially smooth top side with a width corresponding at least to the width of a hoop.

9. Cover according to any one of claims 1 to 8, characterised in that the support elements are equipped underneath with support parts (15) directed vertically to their top side plane, resting on the upper longitudinal belts of the cover frame when the cover is closed.

10. Cover according to any one of claims 1 to 9, characterised in that the support parts extend respectively only over limited longitudinal regions of the support elements.

11. Cover according to any one of claims 1 to 10, characterised in that the support parts are formed by a hollow section form (25).

12. Cover according to any one of claims 1 to 11, characterised in that the support elements are formed by extruded section portions and the support parts arranged underneath are formed by cut-outs of the extruded section.

13. Cover according to any one of claims 1 to 12, characterised in that the support parts are formed by a hollow section form with a triangular cross-sectional profile and are cut-out at least over the central region of the support elements.

14. Cover according to any one of claims 1 to 13, characterised in that the support elements formed by extruded section portions are formed non-symmetrically, viewed over their length, in such a way that they are provided only in a first region corresponding approximately to half their length with a support part arranged underneath and formed by cut-outs of the extruded section but are formed uniformly and flexibly over their remaining length.

## Revendications

1. Bâche coulissante pour carrosseries de véhicule et conteneurs, avec un bâti de bâche constitué de membrures longitudinales supérieures (**4**) couvrant principalement la longueur de l'espace de chargement prenant appui contre le châssis du véhicule (**3**) par l'intermédiaire d'appuis (**1**) montants et de ridelles (**2**), bâti de bâche pour lequel un prélart (**5**), couvrant au moins la zone de toit de la bâche, est porté par des arceaux (**8**), couvrant la largeur de la surface de chargement et soutenus, au moyen de chariots à galet (**6**) et de façon mobile dans la direction longitudinale du véhicule, sur les membrures longitudinales du bâti de bâche, des arceaux, voisins les uns des autres, étant reliés ensemble dans la zone des deux faces longitudinales de la bâche, respectivement au moyen d'un élément de pose (**11**) du prélart, susceptible d'être rabattu autour d'au moins deux lignes d'articulation (**9**, **10**) prédéfinies, de manière qu'une diminution de l'espacement entre deux arceaux voisins, dans cette zone, mène à un pliage vers le haut du prélart, et où les éléments de pose sont disposés reposant, par leurs extrémités (**12, 13**), sur les arceaux et fixés sur les arceaux, par l'intermédiaire de moyens de fixation (**14**) traversants, ainsi que munis, dans la zone située entre les arceaux, de dispositifs d'appui (**15**), se trouvant en appui sur la membrure longitudinale associée lorsque la bâche est fermée,
caractérisée en ce que
les lignes d'articulation **(9**, **10),** voisines de leur appui sur les arceaux **(8)** vides, des éléments de pose **(11)** sont orientées selon un angle par rapport au centre du véhicule, par rapport à l'axe longitudinal de l'arceau.

2. Bâche selon la revendication 1,
caractérisée en ce que les lignes d'articulation des éléments de pose sont orientées selon un angle aigu par rapport à l'axe longitudinal des arceaux.

3. Bâche selon la revendication 1 ou 2,
caractérisée en ce que les éléments de pose sont chacun constitués d'une bande d'un matériau semi-rigide et, sur leur étendue entre les lignes de pliage voisines de leur point de pose sur les arceaux, sont maintenus avec une liberté d'articulation.

4. Bâche selon l'une des revendications 1 à 3,
caractérisée en ce qu'aux extrémités frontales des éléments de pose, transversalement par rapport à leur étendue longitudinale, sont associés sur chaque arceau des contre-appuis.

5. Bâche selon la revendication 4,
caractérisée en ce que les contre-appuis associés aux extrémités frontales des éléments de pose sont réalisés par des traverses, ménagées dans une tôle de maintien (**23**) susceptible d'être reliée à l'arceau.

6. Bâche selon l'une des revendications 1 à 5,
caractérisée en ce que les tôles d'appui entourent les zones d'extrémité, reposant sur l'arceau, des deux éléments de pose à fixer sur un arceau et sont munies de deux traverses (**21, 22**), orientées parallèlement entre elles, ainsi que parallèlement à l'axe longitudinal de l'arceau, et en ce que les tôles de maintien sont susceptibles d'être fixées sur les arceaux par l'intermédiaire de moyens de fixation (**14**), traversant, en même temps, également les zones d'extrémité des éléments de pose.

7. Bâche selon l'une des revendications 1 à 6,
caractérisée en ce que, observées en vue de dessus, les tôles de maintien présentent une forme de profil coïncidant avec l'allure des lignes d'articulation des deux éléments de pose raccordés à un arceau.

8. Bâche selon l'une des revendications 1 à 7,
caractérisée en ce que les éléments de pose présentent une face supérieure pratiquement lisse, avec une largeur correspondant au moins à la largeur d'un arceau.

9. Bâche selon l'une des revendications 1 à 8,
caractérisée en ce que les éléments de pose sont munis, en face inférieure, de parties d'appui (**15**) orientées verticalement par rapport à leur plan de face supérieure, reposant sur les membrures longitudinales supérieures du bâti de bâche, lorsque la bâche est fermée.

10. Bâche selon l'une des revendications 1 à 9,
caractérisée en ce que les parties d'appui s'étendent chacune uniquement sur des zones de longueur limitée des éléments de pose.

11. Bâche selon l'une des revendications 1 à 10, caractérisée en ce que les parties d'appui sont réalisées au moyen d'une forme à profilé creux (**25**).

12. Bâche selon l'une des revendications 1 à 11, caractérisée en ce que les éléments de pose sont formés par des tronçons de profilé extrudés et les parties d'appui, disposées en face inférieure, sont formées par des ouvertures du profilé extrudé.

13. Bâche selon l'une des revendications 1 à 12, caractérisée en ce que les parties d'appui sont formées par une forme en profilé creux, ayant un profil de section transversale triangulaire et découpée au moins sur les zones médianes des éléments de pose.

14. Bâche selon l'une des revendications 1 à 13, caractérisée en ce que, observés sur leur longueur, les éléments de pose, formés par des tronçons de profilé extrudé, sont de configuration asymétrique, du fait des éléments de pose formés par des tronçons de profilé extrudé, de manière que, dans une première zone, correspondant à peu près à la moitié de leur longueur, ils soient d'une partie d'appui formée par des découpures du profil extrudé, en étant cependant de forme identique et en offrant une souplesse en flexion, sur le reste de la longueur.
